# EUROPÄISCHE PATENTSCHRIFT

(11) **EP 3 115 820 B1**
(45) Veröffentlichungstag und Bekanntmachung des Hinweises auf die Patenterteilung: **04.09.2024**
(21) Anmeldenummer: 16178579.5
(22) Anmeldetag: 08.07.2016
(51) Int. Cl.: G02B 7/06, G02B 23/18

(54) **BINOKULARES FERNROHR**
BINOCULAR TELESCOPE
TELESCOPE BINOCULAIRE

(30) Priorität: 09.07.2015 AT 506032015
(43) Veröffentlichungstag der Anmeldung: 11.01.2017
(73) Patentinhaber: Swarovski-Optik AG & Co KG., 6067 Absam (AT)
(72) Erfinder: LEITNER, Matthias, 6069 Gnadenwald (AT)
(74) Vertreter: Burger, Hannes

(56) Entgegenhaltungen:
- EP-A1- 0 961 147
- EP-A1- 2 083 305
- DE-A1- 4 122 349

## Beschreibung

Die Erfindung betrifft ein binokulares Fernrohr mit zwei Tuben, die zur Fokussierung axial verschiebbare Fokussiermittel aufweisen, und mit einer gemeinsamen Fokussiervorrichtung entsprechend dem Oberbegriff des Anspruches 1.

Binokulare Fernrohre bzw. Fernglas weisen neben einer Einstellmöglichkeit zum Fokussieren auch eine Dioptrieverstellung zum Ausgleich des Sehkraftunterschiedes zwischen linkem und rechtem Auge auf. Dies geschieht üblicherweise durch einen zusätzlichen Abgleich an einem Okular. Gesondert davon erfolgt eine gemeinsame Fokussierung beider optischer Systeme bzw. Tuben durch einen sogenannten Mitteltrieb. Bei moderneren Ausführungen ist die Fokussierfunktion als auch die Dioptrieausgleichsfunktion in einer gemeinsamen zentralen Fokussiervorrichtung integriert. Ein gemeinsamer Drehknopf kann durch axiale Verschiebung zwischen einer Fokussierstellung und einer Dioptrieausgleichsstellung hin und her verstellt werden. Die am Drehknopf erfolgende Verstellung wird über ein in den Gelenkbrückenteilen vorgesehenes Getriebe auf die Fokussiermittel des binokularen Fernrohres übertragen. Die Fokussiermittel können entweder durch die Okularlinsen selbst gebildet sein, die dazu in axialer Richtung verschiebbar sind, oder das binokulare Fernrohr weist eine sogenannte Innenfokussierung auf, bei der eine innerhalb der Tuben gelagerte Linse über ein Getriebe axial verschoben wird.

Für einen Benutzer eines Binokularen Fernrohres ist es nun wünschenswert, dass eine einmal vorgenommene Dioptrieeinstellung nach dem Abgleich nicht mehr weiter verstellt wird. Bei den bekannten Fokussiervorrichtungen, die sowohl eine Fokussierstellung als auch eine Dioptrieausgleichsstellung aufweisen, kann es sich als nachteilig erweisen, wenn es beim Hantieren oder Tragen unabsichtlich zu einer Verschiebung des Drehknopfs in die Dioptrieausgleichsstellung kommt. Dadurch kann in weiterer Folge ein Sichtkanal weiter verstellt werden, wodurch der Abgleich des Sehkraftunterschiedes wieder verloren geht.

Das Dokument EP0 961 147 A beschreibt ein binokulares Fernrohr, dessen Fokussiervorrichtung über einen zwischen den beiden Tuben angeordneten Drehknopf verstellt werden kann. Der Drehknopf ist außerdem auch zur Durchführung des Dioptrieausgleichs zwischen den beiden Tuben geeignet. Dazu ist er in axialer Richtung verstellbar und kann seine Funktion auf diese Weise zwischen einer Fokussierstellung und einer Dioptrieausgleichsstellung hin und her gewechselt werden. Im Inneren des Drehknopfes ist zwischen der zentralen Drehknopfachse und dem Drehknopf eine aus mehreren Federn bestehende Schnappverbindung ausgebildet. Durch die Federelemente dieser Schnappverbindung bzw. dieses Kippsprungwerks wird erreicht, dass der Drehknopf in einer seiner beiden axialen Endpositionen, d.h. entweder der Dioptrieausgleichsstellung oder der Fokussierstellung, federelastisch festgehalten wird.

Das Binokular gemäß dem Dokument EP 2 083 305 A1 weist ebenfalls einen axial verschiebbaren Drehknopf zur Verstellung einer Fokussier- als auch einer Dioptrieausgleichsvorrichtung auf. Durch den Wechsel der axialen Position dieses Drehknopfs können unterschiedliche Paarungen von Zahnrädern miteinander in bzw. außer Eingriff gebracht werden, wodurch unterschiedliche Einstellungen der Fokussierlinsen in den beiden Tuben des Binokulars vorgenommen werden können. In einer ringförmig umlaufenden Nut einer zentralen Achse des Drehknopfs ist ein O-Ring derart fixiert, dass er in entsprechend axial versetzt angeordnete Vertiefungen eines Zwischenrohres einrasten kann. Durch die Positionen der Vertiefungen in dem Zwischenrohr sind somit eine Fokussierstellung und eine Dioptrieausgleichsstellung definiert.

Das Dokument DE 41 22 349 A1 beschreibt einen Justiermechanismus eines Fernglases mit zwei Funktionen. Dieser weist eine Scharf-Einstellfunktion und eine Diopter-Differenz-Einstellfunktion auf. Ein durch einen ersten Drehknopf betätigter Schieber bewirkt eine axiale Verschiebung der beiden Fokussierlinsen in den beiden Tuben des Fernglases. Neben dem ersten Drehknopf ist ein zweiter coaxial mit dem ersten Drehknopf angeordneter Drehknopf angeordnet, der eine zusätzliche relative Verschiebung von nur einer der beiden Fokussierlinsen relativ zu dem gemeinsamen Schieber der Scharf-Einstellfunktion bewirkt. Dieser zweite Drehknopf ist seinerseits in axialer Richtung verstellbar, sodass er zwischen einer in dem Gehäuse der Gelenkbrücke versenkten Stellung und einer aus dem Gehäuse der Gelenkbrücke vorstehenden Stellung hin und her verstellt werden kann. Zur Vornahme eines Dioptrieausgleichs kann dieser zweite Drehknopf aus seiner versenkten Stellung angehoben werden. Dazu ist ein Mechanismus mit Rückstellfedern vorgesehen, der ein Versenken bzw. ein Anheben des zweiten Drehknopfs in der Art eines Tastenschalters nur durch Aufbringen einer Drucckraft und nachfolgendes Entlasten ermöglicht.

Es ist daher die Aufgabe der Erfindung, ein binokulares Fernrohr mit einer Fokussiervorrichtung zu schaffen, bei dem eine vorgenommene Einstellung des Dioptrieausgleichs mit höherer Zuverlässigkeit aufrecht erhalten werden kann.

Diese Aufgabe der Erfindung wird gelöst durch ein binokulares Fernrohr mit zwei Tuben, die zur Fokussierung axial verschiebbare Fokussiermittel aufweisen, und mit einer gemeinsamen Fokussiervorrichtung, wobei die Fokussiervorrichtung ein Gehäuse und einen Drehknopf umfasst. Der Drehknopf ist an dem Gehäuse axial verschiebbar, wobei der Drehknopf in einer Fokussierstellung mit einem Fokussiergetriebe drehgekoppelt ist und in einer Dioptrieausgleichsstellung mit einem Dioptriegetriebe drehgekoppelt ist, wobei der Drehknopf eine Arretiermechanik zum Festhalten des Drehknopfs in der Fokussierstellung umfasst. Dabei ist erfindungsgemäß vorgesehen, dass zur Herstellung einer Kopplung des Drehknopfs an das Dioptriegetriebe eine an einer Keilwelle des Drehknopfs in axialer Richtung verstellbare und mit der Keilwelle drehgekoppelte Schaltnabe ausgebildet ist. Die Arretiermechanik umfasst weiters ein Halteelement, sodass in einer arretierten Stellung die Schaltnabe durch das Halteelement formschlüssig gegenüber der Keilwelle fixiert ist und somit eine axiale Verschiebung der Schaltnabe an der Keilwelle verhindert ist. Und der Drehknopf ist mit einem Bedienelement ausgebildet, sodass die Arretiermechanik durch das Bedienelement aktivierbar und deaktivierbar ist.

Von Vorteil ist auch die Ausbildung des Fernrohrs, wonach die Keilwelle des Drehknopfs zur Übertragung einer Drehbewegung auf das Dioptriegetriebe ausgebildet ist.

Gemäß einer vorteilhaften Weiterbildung des Fernrohrs ist vorgesehen, dass die Arretiermechanik einen Stellbolzen mit einem Riegel umfasst, wobei das Halteelement durch den Riegel fixierbar ist, und wobei der Stellbolzen in einem koaxial mit dem Drehknopf verlaufenden Loch in der Keilwelle gelagert ist und die Keilwelle im Bereich des Riegels des Stellbolzens mit einem radial verlaufenden Lagerloch zur Aufnahme des Halteelements ausgebildet ist. Dadurch wird ermöglicht, den Bereich der axialen Verschiebung des Drehknopfes an dem Gehäuse der Fokussiervorrichtung zu beschränken.

Vorteilhafterweise ist vorgesehen, dass der Riegel an einem unteren Ende des Stellbolzens ausgebildet ist.

Eine vorteilhafte Weiterbildung des Fernrohrs sieht vor, dass die Arretiermechanik ein in einem Deckenabschnitt es Drehknopfs gelagertes Bedienelement umfasst, wobei das Bedienelement mit einem oberen Ende des Stellbolzens verbunden ist. Weiters ist vorgesehen, dass das Bedienelement der Arretiermechanik als eine Drehknopfabdeckung ausgebildet ist, wobei die Drehknopfabdeckung in dem Deckenabschnitt des Drehknopfs bezüglich einer Längsmittelachse des Drehknopfs drehbar gelagert ist. Von Vorteil ist dabei, dass die äußere Form des Drehknopfs der Fokussiervorrichtung im Wesentlichen unverändert bleibt, egal ob sich die Arretiermechanik in der aktivierten oder deaktivierten Stellung befindet.

Vorteilhaft ist hier auch die Ausbildung des Fernrohres, wobei das Fokussiergetriebe eine in dem Gehäuse axial verschiebbar gelagerte Fokussierhülse und eine in dem Gehäuse drehbar gelagerte Gewindekupplung umfasst. Weiters ist vorgesehen, dass das Dioptriegetriebe eine an einem Achsabschnitt der Fokussierhülse drehbar gelagerte Dioptriehülse und eine koaxial innerhalb des Achsabschnitts der Fokussierhülse verlaufende Antriebsbuchse umfasst. Diese Ausgestaltungen haben den Vorteil eines besonders kompakten Aufbaus der inneren Struktur der Fokussiervorrichtung, wobei im Wesentlichen hülsenartige Komponenten die relativ zueinander verdrehbar oder axial verschiebbar sind, die verschiedenen Getriebeteile bilden.

Von Vorteil ist auch die Weiterbildung des Fernrohrs, wonach die Antriebsbuchse an einem Achsabschnitt des Gehäuses drehbar gelagert ist.

Eine Weiterbildung des Fernrohrs sieht vor, dass die Schaltnabe durch axiale Verstellung an der Keilwelle mit der Antriebsbuchse in Eingriff bringbar ist. Schließlich ist auch vorgesehen, dass zwischen der Schaltnabe und der Keilwelle zumindest ein federbelastetes Kippsprungwerk mit zwei stabilen Lagen ausgebildet ist, wobei die Schaltnabe in einer der stabilen Lagen mit der Antriebsbuchse in Eingriff steht. Diese Ausbildungen haben den Vorteil eines kompakten, platzsparenden Aufbaus des Dioptriegetriebes.

Eine vorteilhafte Weiterbildung des Fernrohrs besteht auch darin, dass der Stellbolzen in dem koaxial mit dem Drehknopf verlaufenden Loch in der Keilwelle verschwenkbar gelagert ist und weiters dass der Riegel durch einen exzentrisch ausgebildeten Abschnitt des Stellbolzens gebildet ist. Schließlich ist vorgesehen, dass die Schaltnabe an einer dem Lagerloch gegenüberliegenden Innenwand eine Vertiefung zur teilweisen Aufnahme des Halteelementes aufweist, wobei in einer Stellung das Halteelement durch den Riegel formschlüssig in der Vertiefung der Schaltnabe und dem Lagerloch der Keilwelle fixiert ist. Dies hat den Vorteil, dass die Arretierwirkung nur durch die Lage des Halteelements in der fixierten Stellung bestimmt ist. Eine irgendwie auf das Bedienelement der Arretiermechanik rückwirkende und die Arretierung damit aufhebende Rückstellkraft ist nicht vorhanden.

Gemäß einer alternativen Ausführungsform des Fernrohrs bzw. der Fokussiervorrichtung ist vorgesehen, dass der Stellbolzen in dem koaxial mit dem Drehknopf verlaufenden Loch in der Keilwelle axial verschiebbar gelagert ist. Dabei ist weiters vorgesehen, dass der Riegel durch einen keilförmig ausgebildeten Abschnitt des Stellbolzens gebildet ist. Schließlich ist der Stellbolzen gelenkig mit der Drehknopfabdeckung verbunden, wobei die Drehknopfabdeckung in dem Deckenabschnitt bezüglich einer senkrecht zu der Längsmittelachse des Drehknopfs verlaufenden Achse hochklappbar gelagert ist. Von Vorteil ist dabei, dass für einen Benutzer die inaktive Stellung der Arretierung leichter erkennbar ist.

Gemäß einer weiteren, alternativen Ausführungsform des Fernrohrs bzw. der Fokussiervorrichtung ist vorgesehen, dass der Achsabschnitt des Gehäuses, an dem die Antriebsbuchse gelagert ist, an einer dem Lagerloch gegenüberliegenden Innenwand eine umlaufende Nut zur teilweisen Aufnahme des Halteelements aufweist, wobei in einer Stellung des Riegels das Halteelement durch den Riegel formschlüssig in der Nut bzw. in der Vertiefung des Achsabschnitts des Gehäuses und dem Lagerloch der Keilwelle fixiert ist. Dies hat den Vorteil, dass dadurch die Arretierung direkt zwischen der Arretiermechanik in dem Drehknopf und einem Teil des Gehäuses wirksam ist.

Vorteilhaft ist auch die Weiterbildung wonach das Halteelement durch eine Kugel ausgebildet ist. Bei Relativbewegungen benachbarter Teile der Mechanik relativ zu der Kugel bzw. dem Lagerloch in der Keilwelle ermöglicht die Kugelform eine Abrollbewegung und somit eine Reduktion der Reibung.

Zum besseren Verständnis der Erfindung wird diese anhand der nachfolgenden Figuren näher erläutert.

Es zeigen jeweils in stark vereinfachter, schematischer Darstellung:
- Fig. 1: Ein binokulares Fernrohr mit einer Fokussiervorrichtung;
- Fig. 2: eine Fokussiervorrichtung perspektivisch dargestellt;
- Fig. 3: das Gehäuse der Fokussiervorrichtung gemäß Fig. 2;
- Fig. 4: das Fokussiergetriebe mit der daran gelagerten Dioptriehülse des Dioptriegetriebes der Fokussiervorrichtung gemäß Fig. 2;
- Fig. 5: den Drehknopfoberteil gemäß Fig. 2 gemeinsam mit der Antriebsbuchse der Dioptriehülse;
- Fig. 6: den Drehknopfoberteil mit Keilwelle und Schaltnabe;
- Fig. 7: die Arretiermechanik des Drehknopfes gemäß Fig. 6;
- Fig. 8: den Drehknopfoberteil mit dem Stellbolzen der Arretiermechanik;
- Fig. 9: einen Querschnitt von Keilwelle und Schaltnabe;
- Fig. 10: ein alternatives Ausführungsbeispiel der Arretiermechanik der Fokussiervorrichtung gemäß Fig. 1;
- Fig. 11: ein weiteres alternatives Ausführungsbeispiel der Arretiermechanik der Fokussiervorrichtung;
- Fig. 12: einen Querschnitt der Keilwelle mit der Schaltnabe und dem Halteelement in der nicht arretierten Stellung gemäß Fig. 9;
- Fig. 13: einen Querschnitt gemäß Fig. 9, wobei die Keilwelle, die Schaltnabe und das Halteelement in der arretierten Stellung gezeigt sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

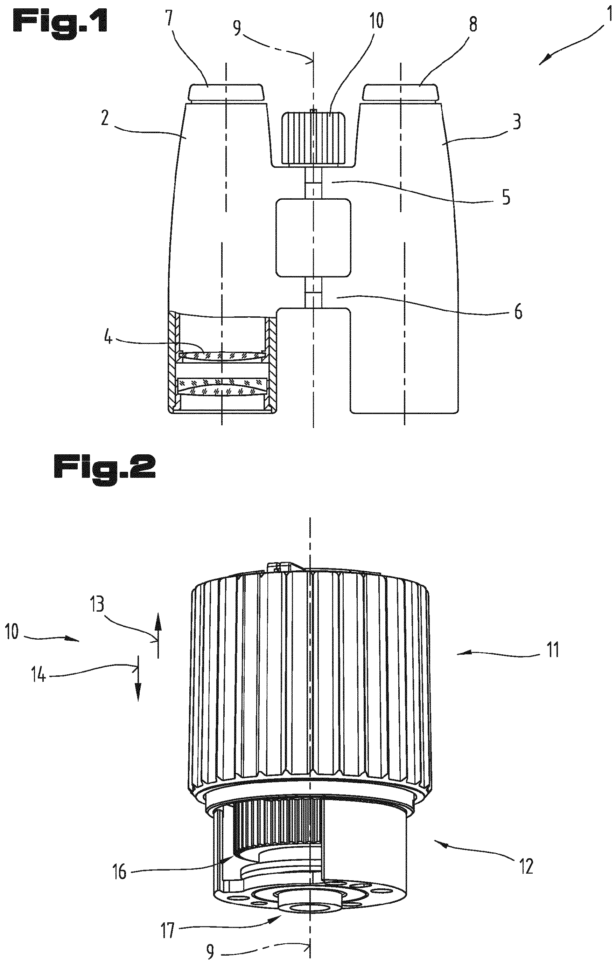

Das in Fig. 1 dargestellte binokulare Fernrohr 1 weist eine sogenannte Innenfokussierung auf, wobei in den beiden Tuben 2, 3 jeweils eine axial verschiebbare Linse 4 als Fokussiermittel vorgesehen ist. Bei dem dargestellten Ausführungsbeispiel des binokularen Fernrohres 1 sind die beiden Tuben 2, 3 durch zwei Gelenkbrücken 5, 6 schwenkbar verbunden, sodass eine Einstellung der beiden Okulare 7, 8 auf den Augenabstand eines Benutzers möglich ist. Koaxial mit der Längsmittelachse 9 der Gelenkbrücken 5, 6 ist an der den Okularen 7, 8 zugewandten Gelenkbrücke 5 eine Fokussiervorrichtung 10 angeordnet. Mithilfe der Fokussiervorrichtung 10 kann bei dem Fernrohr 1 sowohl ein Dioptrieausgleich als auch die Einstellung der Fokussierung auf ein entferntes Objekt vorgenommen werden. Dazu ist die Fokussiervorrichtung 10 unter Zwischenschaltung eines nicht weiter beschriebenen Getriebes mit den axial verschiebbaren Fokussiermitteln 4 in den beiden Tuben 2, 3 mechanisch verbunden.

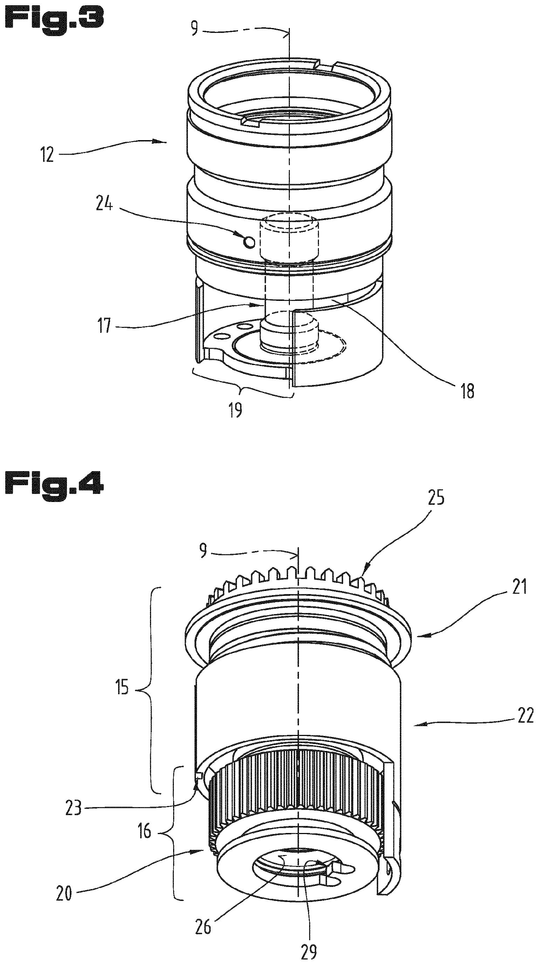

Die Fig. 2 zeigt die erfindungsgemäße Fokussiervorrichtung 10 perspektivisch dargestellt. Je nachdem ob sich der Drehknopf 11 der Fokussiervorrichtung 10 in seiner Fokussierstellung oder seiner Dioptrieausgleichsstellung befindet, werden durch eine Drehbewegung des Drehknopfes 11 die Linsen 4 in beiden Tuben 2, 3 gleich verstellt oder es wird in nur einem der beiden Tuben 2, 3 die Linse 4 verstellt. Der Drehknopf 11 ist dazu an einem Gehäuse 12 der Fokussiervorrichtung 10 (Fig. 3) sowohl drehbar als auch axial verschiebbar gelagert. In der Darstellung gemäß Fig. 2 befindet sich der Drehknopf 11 in seiner Fokussierstellung. Durch Anheben in axialer Richtung, gemäß Pfeil 13 kann der Drehknopf 11 in die Dioptrieausgleichsstellung der Fokussiervorrichtung 10 überführt werden. Eine axiale Verschiebung in Richtung von Pfeil 14 bringt den Drehknopf 11 aus der Dioptrieausgleichsstellung wieder zurück in die Fokussierstellung der Fokussiervorrichtung 10.

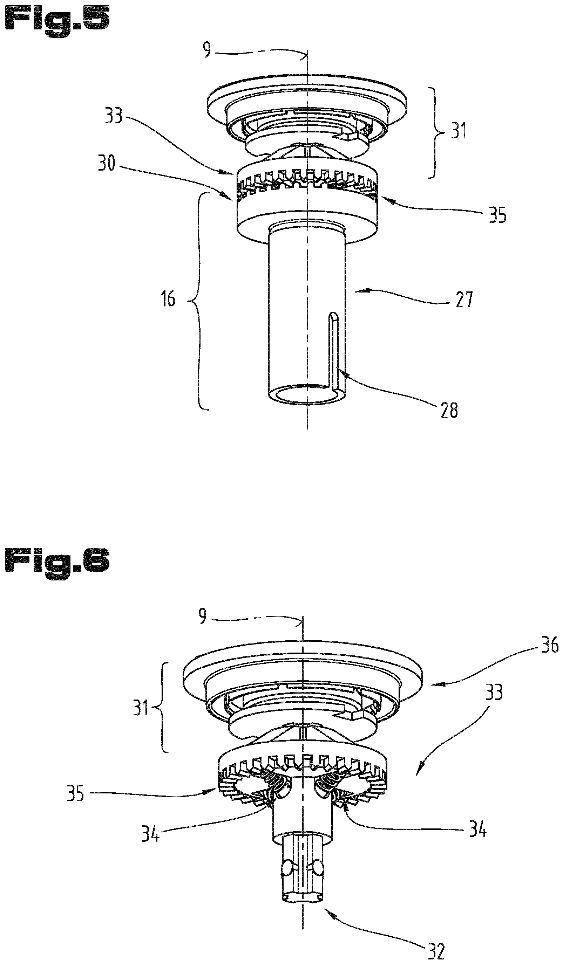

Die beiden genannten Stellungen des Drehknopfs 11, das heißt die Fokussierstellung einerseits und die Dioptrieausgleichsstellung andererseits, sind gleichbedeutend damit, dass in diesen Stellungen der Drehknopf 11 mechanisch jeweils mit einem entsprechenden Getriebe gekoppelt ist. Das heißt in der unteren bzw. niedergedrückten Stellung (Pfeil 14), der Fokussierstellung wirkt der Drehknopf 11 auf ein Fokussiergetriebe 15 der Fokussiervorrichtung 10 ein (Fig. 4). Andererseits ist der Drehknopf 11 in seiner angehobenen Stellung (Pfeil 13), der Dioptrieausgleichsstellung mit einem Dioptriegetriebe 16 mechanisch gekoppelt (Fig. 4, 5) und bewirkt mit dessen Hilfe in nur einem der Tuben 7, 8 eine axiale Verschiebung des Fokussiermittels bzw. der Linse 4.

Die Fig. 3 zeigt das Gehäuse 12 der Fokussiervorrichtung 10 gemäß Fig. 2. Die entsprechenden mechanischen Verstellwege entstehen in Bezug auf das feststehende Gehäuse 12, das seinerseits an der Gelenkbrücke 5 befestigt ist (Fig. 1). Die äußere Form des Gehäuses 12 der Fokussiervorrichtung 10 ist im Wesentlichen kreiszylinderförmig bzw. topfförmig gestaltet (Fig. 3). Am Bodenbereich des Gehäuses 12 weist dieses im Inneren einen koaxial zur Längsmittelachse 9 ausgebildeten Achsabschnitt 17 auf. Während der Drehknopf 11 den oberen Bereich des Gehäuses 12 kappenartig umfasst (Fig. 2), sind das Fokussiergetriebe 15 und das Dioptriegetriebe 16 im Inneren des Gehäuses 12 gelagert. Zur Anbindung weiterführender Getriebeteile hin zu den Linsen 4 der Tuben 2, 3 sind in dem unteren Bereich des Gehäuses 12 ein erstes Fenster 18 und ein zweites Fenster 19 vorgesehen.

Die Fig. 4 zeigt das Fokussiergetriebe 15 mit einer daran gelagerten Dioptriehülse 20, die einen Teil des Dioptriegetriebes 16 bildet. Das Fokussiergetriebe 15 umfasst eine Gewindekupplung 21 und eine Fokussierhülse 22. Die Gewindekupplung 21 ist ihrerseits bezüglich der Längsmittelachse 9 in dem Gehäuse 12 drehbar gelagert, während die Fokussierhülse 22 nur in axialer Richtung verschiebbar ist. Dazu weist die Fokussierhülse 22 eine in axialer Richtung verlaufende Nut 23 auf, in die ein von der Innenseite des Gehäuses 12 nach innen vorstehender Bolzen 24 eingreift (Fig. 3). Eine Drehbewegung der Gewindekupplung 21 wird auf diese Weise in eine axiale Verschiebung der Fokussierhülse 22 umgewandelt, durch die in weiterer Folge die Linsen 4 der Tuben 2, 3 in axialer Richtung verstellt werden. Die erforderliche Drehbewegung der Gewindekupplung 21 wird durch mechanische Ankopplung einer an dieser vorgesehenen Verzahnung 25 an den Drehknopf 11 erreicht. Die Verzahnung 25 der Gewindekupplung 21 ist in der Art eines Kronenrades ausgebildet und greift in eine entsprechende Verzahnung, die in dem Drehknopf 11 vorgesehen ist (nicht dargestellt), ein. Dies wird erreicht, indem der Drehknopf 11 entsprechend Pfeil 14 in die Fokussierstellung bewegt wird.

Die Dioptriehülse 20 des Dioptriegetriebes 16 ist ihrerseits an einem hülsenförmig ausgebildeten Achsabschnitt 26 der Fokussierhülse 22 gelagert und wird gemeinsam mit der Fokussierhülse 22 auch in axialer Richtung mitbewegt. Bei Anbindung der axialen Bewegung der Linse 4 des einen der Tuben 2, 3 direkt an die Fokussierhülse 22 und der Linse 4 des anderen der beiden Tuben 2, 3 an die Dioptriehülse 20 können so die Linsen 4 in beiden Tuben 2, 3 in gleichem Ausmaß verstellt werden. Für die Linse 4, die mit der Dioptriehülse 20 mechanisch gekoppelt ist, steht aber zusätzlich eine der Bewegung der Fokussierhülse 22 überlagerte Bewegung, durch den ein Dioptrieausgleich zwischen den beiden Tuben 2, 3 erreicht werden kann, zur Verfügung.

Die Dioptriehülse 20 ist an ihrem Umfang als Zahnrad ausgebildet. Zur Erzeugung einer Drehbewegung der Dioptriehülse 20 weist das Dioptriegetriebe 16 eine Antriebsbuchse 27 (Fig. 5) auf. Sie ist dazu an dem Achsabschnitt 17 des Gehäuses 12 drehbar gelagert (Fig. 3), wobei sie an dem Achsabschnitt 17 des Gehäuses 12 derart befestigt ist, dass sie in axialer Richtung feststehend ist. Zur Übertragung der Drehbewegung zwischen der Antriebsbuchse 27 und der Dioptriehülse 20, die wegen ihrer Lagerung an der Fokussierhülse 22 auch axial beweglich ist, besteht zwischen diesen eine Kopplung ihrer Drehbewegungen, die einen axialen Ausgleich erlaubt. Gemäß diesem Ausführungsbeispiel ist die Kopplung durch einen in der Antriebsbuchse 27 axial verlaufenden Schlitz 28 (Fig. 5) und einen in diesen Schlitz 28 eingreifenden Stift 29 der Dioptriehülse 20 ausgebildet (Fig. 4). Die Antriebsbuchse 27 weist außerdem an ihrem oberen Endbereich eine Verzahnung 30 in der Art einer Kronenradverzahnung auf.

Während die Antriebsbuchse 27 mit ihrem rohrförmigen bzw. zylinderförmigen Abschnitt an dem Achsabschnitt 17 des Gehäuses 12 drehbar gelagert ist (Fig. 3), bildet der äußere Zylindermantel der Antriebsbuchse 27 gleichzeitig eine Achse für die Innenseite des Achsabschnitts 26 der Fokussierhülse 22 (Fig. 4).

Um nun einen Dioptrieausgleich vornehmen zu können, ist es erforderlich, eine mechanische Kopplung des Drehknopfs 11 mit der Antriebsbuchse 27 des Dioptriegetriebes 16 herzustellen. Dies wird erreicht durch eine Ankopplung an der Verzahnung 30 der Antriebsbuchse 27. Der Drehknopf 11 (Fig. 2) umfasst dazu einen Deckenabschnitt 31 mit einer von dem Deckenabschnitt 31 nach unten bzw. in das Innere abstehend befestigten Antriebswelle bzw. Keilwelle 32. Diese Komponenten des Drehknopfs 11 sind aus Gründen der Übersichtlichkeit separiert gemeinsam in Fig. 6 dargestellt. An der Keilwelle 32 ist außerdem eine Schaltnabe 33, und zwar mit der Keilwelle 32 drehbar gekoppelt, angeordnet, wobei die Schaltnabe 33 an der Keilwelle 32 in axialer Richtung verschiebbar ist. Die Verbindung bzw. der Querschnitt der Verbindungsstelle zwischen der Keilstelle 32 und der Schaltnabe 33 weist ein kreuzförmiges Profil auf, sodass eine Drehbewegung von der Keilwelle 32 auf die Schaltnabe 33 übertragen werden kann. Die Verschiebung der Schaltnabe 33 an der Keilwelle 32 wird unterstützt durch die Ausbildung von zwischen der Schaltnabe 33 und der Keilwelle 32 wirkenden Kippsprungwerken 34. Unter Druckspannung vorbelastete Federn dieser Kippsprungwerke 34 halten die Schaltnabe 32 relativ zu der Keilwelle 32 entweder in einer oberen oder in einer unteren Stellung bzw. Lage fest. Die Schaltnabe 33 weist darüber hinaus an ihrem äußeren Umfang eine nach unten stehende Verzahnung 35 nach Art eines Kronenzahnrads auf.

Ein Umklappen der Schaltnabe 33 entgegen der Federkraft der Kippsprungwerke 34 erfolgt selbsttätig, da der axiale Bewegungsbereich der Schaltnabe 33 im Inneren der Fokussiervorrichtung begrenzt ist. Bei einer Bewegung des Drehknopfs 11 nach Oben (Pfeil 13) kommt ein oberer Rand der Schaltnabe 33 an einem inneren Umfang der Gewindekupplung 21 zur Anlage und wird von diesem an einer weiteren Aufwärtsbewegung gehindert (nicht dargestellt). Schließlich ändert sich die in vertikaler Richtung wirkende Komponente der Kraft der Federn der Kippsprungwerke 34, sodass die Schaltnabe 33 von diesen in ihre untere Stellung gedrückt wird. In umgekehrter Richtung steht der Schaltnabe 33 die Antriebsbuchse 27 bzw. deren Verzahnung 30 als Hindernis im Wege und bewirken die Kippsprungwerke 34 schließlich ein Umklappen der Schaltnabe 33 in ihre obere Stellung, wenn der Drehknopf 11 wieder in seine Fokussierstellung gedrückt wird.

Die Verzahnung 35 der Schaltnabe 33 und die Verzahnung 30 der Antriebsbuchse 27 können in Abhängigkeit von der Stellung des Drehknopfs 11 an dem Gehäuse 12 in oder außer Eingriff gebracht werden (Fig. 5). Wird der Drehknopf 11 entsprechend Pfeil 13 angehoben und in die Dioptrieausgleichsstellung gebracht (Fig. 2), so wird dabei gleichzeitig die Schaltnabe 33 an der Keilwelle 32 nach unten verschoben. Dies führt schließlich dazu, dass die Verzahnung 35 der Schaltnabe 33 in die Verzahnung 30 der Antriebsbuchse 27 eingreift und so die Übertragung einer Drehbewegung von dem Drehknopf 11 auf die Dioptriehülse 20 ermöglicht. Mit der Bewegung des Drehknopfs 11 nach oben, entsprechend Pfeil 13 (Fig. 2) wird gleichzeitig die mechanische Kopplung mit der Verzahnung 25 der Gewindekupplung 21 (Fig. 4) aufgehoben.

Durch eine Verstellung des Drehknopfs 11 in umgekehrter Richtung, entsprechend Pfeil 14 (Fig. 2) wird dieser wiederum in seine Fokussierstellung gebracht, wobei die Kopplung an die Fokussierhülse 22 über die Verzahnung 25 der Gewindekopplung 21 wieder hergestellt wird. Gleichzeitig damit wird die Schaltnabe 33 an der Keilwelle 32 wieder nach oben verschoben (Fig. 6) und wird derart die Kopplung an die Verzahnung 30 der Antriebsbuchse 27 wieder aufgehoben.

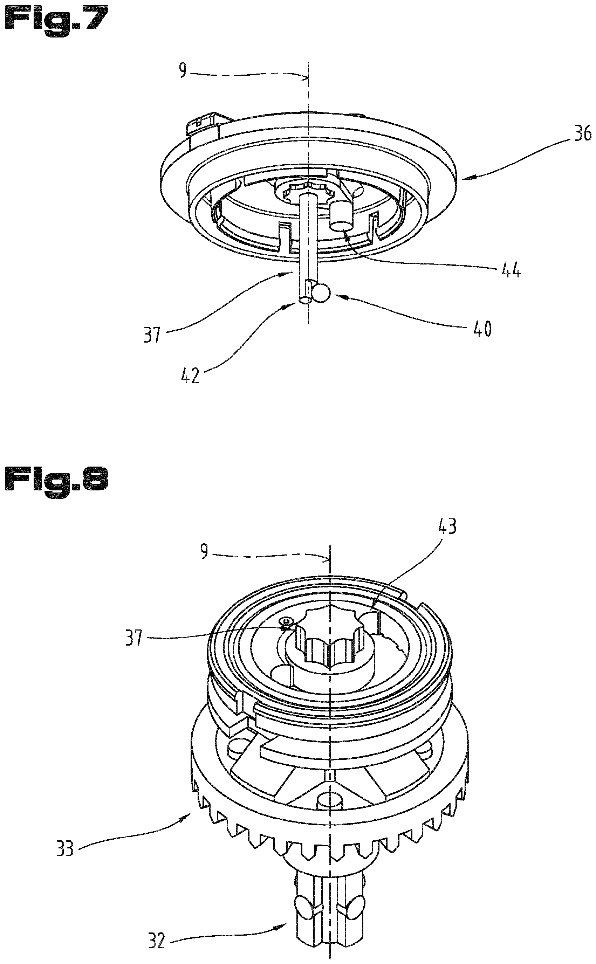

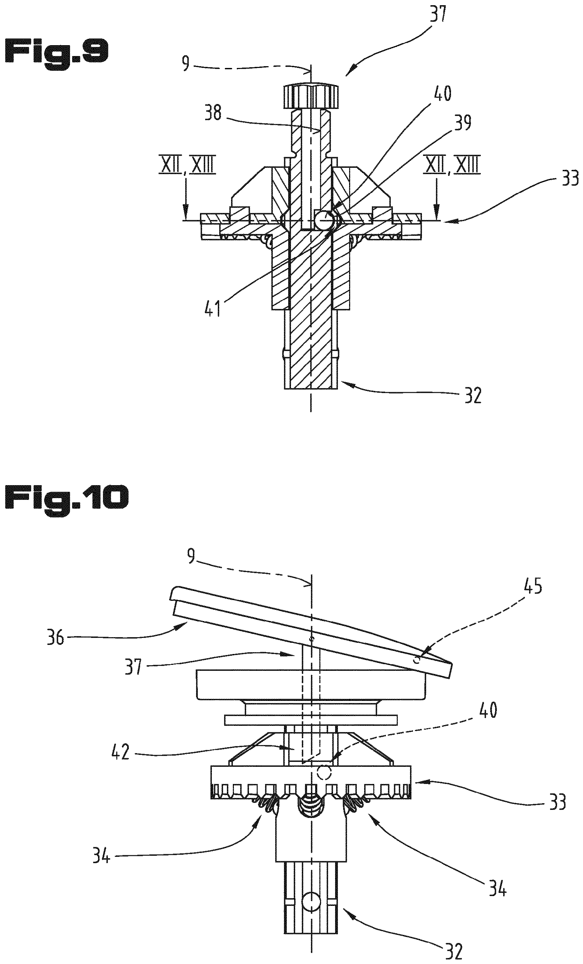

Die erfindungsgemäße Fokussiervorrichtung ist schließlich mit einer Arretierung zum Festhalten des Drehknopfs 11 in seiner Fokussierstellung ausgebildet. Mit dieser Arretierung kann sichergestellt werden, dass es nicht zu einer unbeabsichtigten Verstellung eines von einem Benutzer vorgenommenen Dioptrieausgleichs kommt. Dies wäre möglich, wenn beim Hantieren mit dem Fernrohr 1 der Drehknopf 11 unbemerkt in die Dioptrieausgleichsstellung (Pfeil 13) angehoben würde. Zur Arretierung der Fokussiervorrichtung ist in dem in Fig. 6 dargestellten Drehknopfoberteil eine Arretiermechanik ausgebildet. Diese Arretiermechanik umfasst eine in dem Deckenabschnitt 31 des Drehknopfs 11 angeordnete Drehknopfabdeckung 36 und einen daran koaxial bezüglich der Längsmittelachse 9 befestigten Stellbolzen 37 (Fig. 7, 8). Die Keilwelle 32 weist dazu ein koaxial bzw. zentral angeordnetes und axial verlaufendes Loch 38 auf, in dem der Stellbolzen 37 gelagert ist (Fig. 9).

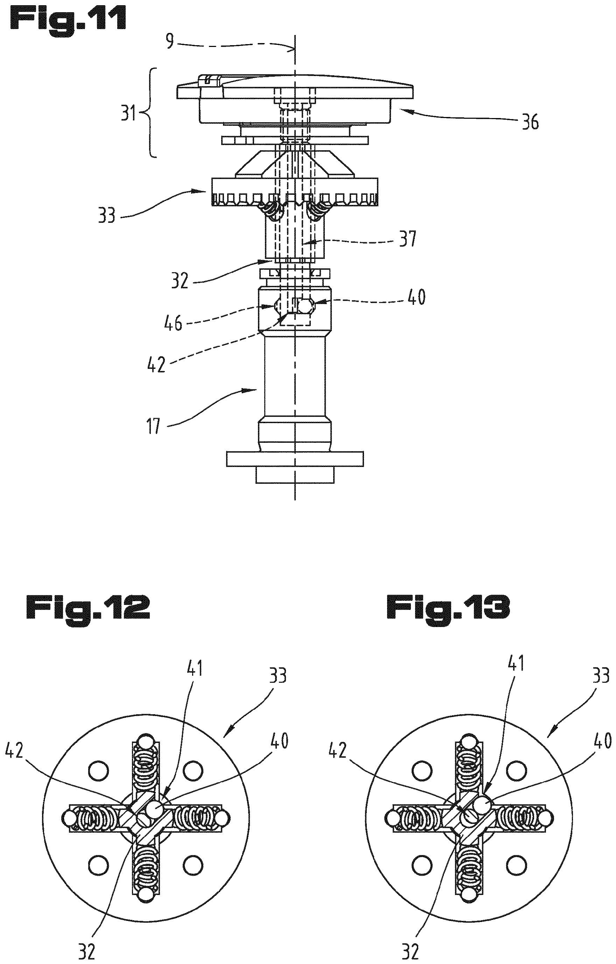

Gemäß einem ersten Ausführungsbeispiel der Arretiermechanik ist der Stellbolzen 37 und die mit ihm drehfest verbundene Drehknopfabdeckung 36 in der Keilwelle 32 um die Längsmittelachse 9 verschwenkbar. Weiters ist in der Keilwelle 32 ein radial verlaufendes Lagerloch 39 vorgesehen, in dem ein in radialer Richtung verschiebbares Halteelement 40 gelagert ist. Gemäß diesem Ausführungsbeispiel ist das Halteelement 40 durch eine Kugel ausgebildet (Fig. 7, 9). Das Halteelement 40 könnte aber auch eine andere geeignete Form aufweisen, beispielsweise könnte es die Form eines an seinen Enden abgerundeten Bolzens haben. An einer Innenwand der Schaltnabe 33 ist schließlich eine Vertiefung 41 ausgebildet. Andererseits weist der Stellbolzen 37 an einem unteren Ende einen Riegel 42 auf. Der Riegel 42 ist im Bereich des Lagerlochs 39 in der Keilwelle 32 im Querschnitt exzentrisch profiliert. Durch Verschwenken des Stellbolzens 37 mit der Drehknopfabdeckung 36 um ca. 180° wird das Halteelement 40 von dem Riegel 42 in dem Lagerloch 39 der Keilwelle 32 nach außen verschoben und in der Vertiefung 41 der Schaltnabe 33 formschlüssig fixiert (Fig. 12, 13). Das Halteelement 40 nimmt schließlich eine Lage zwischen der Schaltnabe 33 und der Keilwelle 32 ein, bei der sein Querschnitt zumindest teilweise sowohl in die Vertiefung 41 der Schaltnabe als auch in das Lagerloch 39 der Keilwelle hineinragt. Das derart durch den Riegel 42 des Stellbolzens 37 fixierte Halteelement 40 verhindert eine axiale Verschiebung der Schaltnabe 33 an der Keilwelle 32 (Fig. 13). Die Anordnung des Lagerlochs 39 in der Keilwelle 32, als auch die Anordnung der Vertiefung 41 an der Innenseite der Schaltnabe 33 sind so gewählt und aufeinander ausgerichtet, dass die Arretierung der der Fokussierstellung entsprechenden Stellung der Schaltnabe 33 entspricht.

Die Fig. 12 und 13 zeigen jeweils einen Querschnitt der Keilwelle 32 mit der Schaltnabe 33 und dem Halteelement 40 gemäß Fig. 9, wobei das durch eine Kugel gebildete Halteelement 40 in Fig. 12 in der nicht arretierten Stellung und in Fig. 13 in der arretierten Stellung dargestellt ist.

Zum Aktivieren bzw. Deaktivieren der Arretiermechanik steht die Drehknopfabdeckung 36 als Bedienelement zur Verfügung. Diese ist gemäß diesem Ausführungsbeispiel mit dem Stellbolzen 37 fest verbunden und kann, wie vorstehend bereits ausgeführt, um ca. 180° verschwenkt werden. Damit die Arretierung zuverlässig vorgenommen werden kann, ist der Verschwenkbereich der Drehknopfabdeckung 36 bzw. des Stellbolzens 37 durch ein in dem Deckenabschnitt 31 vorgesehenes Anschlagelement 43 begrenzt. Andererseits ist die Drehknopfabdeckung 36 mit einem exzentrisch angeordneten Anschlagbolzen 44 ausgebildet, dessen ringförmiger Bewegungsbereich durch das Anschlagelement 43 beidseitig begrenzt ist (Fig. 7, 8).

Die Fig. 10 zeigt ein alternatives Ausführungsbeispiel der Arretiermechanik der Fokussiervorrichtung 10. Der Stellbolzen 37 ist dabei in axialer Richtung, das heißt parallel zur Längsmittelachse 9 verschiebbar ausgebildet. Der Riegel 42 des Stellbolzen 37 hat dabei die Form eines Keiles mit sich von unten nach oben hin verdickendem Querschnitt. Die Drehknopfabdeckung 36 und der Stellbolzen 37 sind gelenkig miteinander verbunden, wobei die Drehknopfabdeckung 36 in dem Deckenabschnitt 31 bezüglich einer senkrecht zu der Längsmittelachse 9 verlaufenden Achse 45 hocklappbar gelagert ist. Soll der Drehknopf 11 der Fokussiervorrichtung 10 in die Dioptrieausgleichsstellung gebracht werden, so muss zuerst die Arretierung deaktiviert werden, in dem die Drehknopfabdeckung 36 einseitig angehoben und schräg gestellt wird. Gleichzeitig damit wird der mit der Drehknopfabdeckung 36 gelenkig verbundene Stellbolzen 37 in dem Loch 38 der Keilwelle 32 nach oben gezogen und das Halteelement 40 von dem Riegel 42 frei gegeben. Die Schaltnabe 33 wird dadurch wieder an der Keilwelle 32 verschiebbar und ist es schließlich auch möglich, dass der Drehknopf 11 nach oben, entsprechend Pfeil 13 in die Dioptrieausgleichsstellung angehoben wird. Die Drehknopfabdeckung 36 verbleibt dabei und auch während der Vornahme des Dioptrieabgleichs in der schräg hochgestellten Stellung, wie in Fig. 10 dargestellt. Nachdem der Benutzer den Dioptrieabgleich abgeschlossen hat, wird der Drehknopf 11 wieder nach unten, entsprechend Pfeil 14 verschoben und kann danach die Arretierung wieder aktiviert werden, indem die Drehknopfabdeckung 36 nach unten geklappt wird. Damit wird auch der Riegel 42 des Stellbolzens 37 wieder so weit nach unten verschoben, dass das Halteelement 40 zwischen der Schaltnabe 33 und der Keilwelle 32 eingeklemmt wird. Die Arretierung ist sodann wieder aktiv.

Die Fig. 11 zeigt ein weiteres, alternatives Ausführungsbeispiel der Arretiermechanik der Fokussiervorrichtung 10. Dabei sind die Drehknopfabdeckung 36 und der Stellbolzen 37 ebenfalls verschwenkbar ausgebildet, wie es anhand der Fig. 7 bis 9 beschrieben worden ist. Gemäß diesem Ausführungsbeispiel erstreckt sich der Stellbolzen 37 nun aber bis in den Achsabschnitt 17 des Gehäuses 12 (Fig. 3). Der Riegel 42 des Stellbolzens 37 als auch das Lagerloch 39 der Keilwelle 32 sind dabei ebenfalls im Bereich des Achsabschnitts 17 des Gehäuses 12 angeordnet. An einer Innenseite des Achsabschnitts 17 weist diese eine ringförmig umlaufende Nut 46 zur Aufnahme des Halteelements 40 auf. Im Bereich der Nut 46 des Achsabschnitts 17 sind sowohl die Innenseite des Achsabschnitts 17 als auch die Keilwelle 32 durch aneinander liegende Zylindermantelflächen gebildet.

Ein weiteres, alternatives Ausführungsbeispiel des Arretiermechanismus sieht vor, dass der Stellbolzen 37 axial verschiebbar ausgebildet ist (entsprechend Beschreibung der Fig. 10) und ein Eingriff zwischen dem Halteelement 40 und dem Achsabschnitt 17 des Gehäuses 12 erfolgt (wie es gemäß Fig. 11 beschrieben ist).

Die Ausführungsbeispiele zeigen mögliche Ausführungsvarianten des Fernrohrs 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1, 2, 3, 4, 5, 6, 7, 8, 9; 10; 11; 12 und 13 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Fernrohrs dieses bzw. dessen Bestandteile teilweise unmaßstäblich und/oder vergrößert und/oder verkleinert dargestellt wurden.

### Bezugszeichenaufstellung

| | | | |
|---|---|---|---|
| 1 | Fernrohr | 31 | Deckenabschnitt |
| 2 | Tubus | 32 | Keilwelle |
| 3 | Tubus | 33 | Schaltnabe |
| 4 | Linse | 34 | Kippsprungwerk |
| 5 | Gelenkbrücke | 35 | Verzahnung |
| 6 | Gelenkbrücke | 36 | Drehknopfabdeckung |
| 7 | Okular | 37 | Stellbolzen |
| 8 | Okular | 38 | Loch |
| 9 | Längsmittelachse | 39 | Lagerloch |
| 10 | Fokussiervorrichtung | 40 | Halteelement |
| 11 | Drehknopf | 41 | Vertiefung |
| 12 | Gehäuse | 42 | Riegel |
| 13 | Pfeil | 43 | Anschlagelement |
| 14 | Pfeil | 44 | Anschlagbolzen |
| 15 | Fokussiergetriebe | 45 | Achse |
| 16 | Dioptriegetriebe | 46 | Nut |
| 17 | Achsabschnitt | | |
| 18 | Fenster | | |
| 19 | Fenster | | |
| 20 | Dioptriehülse | | |
| 21 | Gewindekupplung | | |
| 22 | Fokussierhülse | | |
| 23 | Nut | | |
| 24 | Bolzen | | |
| 25 | Verzahnung | | |
| 26 | Achsabschnitt | | |
| 27 | Antriebsbuchse | | |
| 28 | Schlitz | | |
| 29 | Stift | | |
| 30 | Verzahnung | | |

## Patentansprüche

1. Binokulares Fernrohr (1) mit zwei Tuben (2, 3), die zur Fokussierung axial verschiebbare Fokussiermittel (4) aufweisen, und mit einer gemeinsamen Fokussiervorrichtung (10), wobei die Fokussiervorrichtung (10) ein Gehäuse (12) und einen Drehknopf (11) umfasst und der Drehknopf (11) an dem Gehäuse (12) axial verschiebbar ist, wobei der Drehknopf (11) in einer Fokussierstellung mit einem Fokussiergetriebe (15) drehgekoppelt ist und der Drehknopf (11) in einer Dioptrieausgleichsstellung mit einem Dioptriegetriebe (16) drehgekoppelt ist, wobei der Drehknopf (11) eine Arretiermechanik zum Festhalten des Drehknopfs (11) in der Fokussierstellung umfasst, **dadurch gekennzeichnet, dass** zur Herstellung einer Kopplung des Drehknopfs (11) an das Dioptriegetriebe (16) eine an einer Keilwelle (32) des Drehknopfs (11) in axialer Richtung verstellbare und mit der Keilwelle (32) drehgekoppelte Schaltnabe (33) ausgebildet ist,
- wobei die Arretiermechanik ein Halteelement (40) umfasst und in einer arretierten Stellung die Schaltnabe (33) durch das Halteelement (40) formschlüssig gegenüber der Keilwelle (32) fixiert ist und somit eine axiale Verschiebung der Schaltnabe (33) an der Keilwelle (32) verhindert ist,
- und wobei der Drehknopf (11) mit einem Bedienelement ausgebildet ist und die Arretiermechanik durch das Bedienelement aktivierbar und deaktivierbar ist.

2. Fernrohr nach Anspruch 1, **dadurch gekennzeichnet, dass** die Arretiermechanik einen Stellbolzen (37) mit einem Riegel (42) umfasst, wobei das Halteelement (40) durch den Riegel (42) fixierbar ist, und wobei der Stellbolzen (37) in einem koaxial mit dem Drehknopf (11) verlaufenden Loch (38) in der Keilwelle (32) gelagert ist und die Keilwelle (32) im Bereich des Riegels (42) des Stellbolzens (37) mit einem radial verlaufenden Lagerloch (39) zur Aufnahme des Halteelements (40) ausgebildet ist.

3. Fernrohr nach Anspruch 2, **dadurch gekennzeichnet, dass** der Riegel (42) an einem unteren Ende des Stellbolzens (37) ausgebildet ist.

4. Fernrohr nach Anspruch 2 oder 3, **dadurch gekennzeichnet, dass** das Bedienelement der Arretiermechanik in einem Deckenabschnitt (31) des Drehknopfs (11) gelagert ist, wobei das Bedienelement mit einem oberen Ende des Stellbolzens (37) verbunden ist.

5. Fernrohr nach einem der vorhergehenden Ansprüche, **dadurch gekennzeichnet, dass** das Bedienelement der Arretiermechanik als eine Drehknopfabdeckung (36) ausgebildet ist, wobei die Drehknopfabdeckung (36) in dem Deckenabschnitt (31) des Drehknopfs (11) bezüglich einer Längsmittelachse (9) des Drehknopfs (11) drehbar gelagert ist.

6. Fernrohr nach einem der vorhergehenden Ansprüche, **dadurch gekennzeichnet, dass** das Fokussiergetriebe (15) eine in dem Gehäuse (12) axial verschiebbar gelagerte Fokussierhülse (22) und eine in dem Gehäuse (12) drehbar gelagerte Gewindekupplung (21) umfasst.

7. Fernrohr nach Anspruch 6, **dadurch gekennzeichnet, dass** das Dioptriegetriebe (16) eine an einem Achsabschnitt (26) der Fokussierhülse (22) drehbar gelagerte Dioptriehülse (20) und eine koaxial innerhalb des Achsabschnitts (26) der Fokussierhülse (22) verlaufende Antriebsbuchse (27) umfasst.

8. Fernrohr nach Anspruch 7, **dadurch gekennzeichnet, dass** die Antriebsbuchse (27) an einem Achsabschnitt (17) des Gehäuses (12) drehbar gelagert ist.

9. Fernrohr nach einem der Ansprüche 7 bis 8, **dadurch gekennzeichnet, dass** die Schaltnabe (33) durch axiale Verstellung an der Keilwelle (32) mit der Antriebsbuchse (27) in Eingriff bringbar ist.

10. Fernrohr nach einem der Ansprüche 7 bis 9, **dadurch gekennzeichnet, dass** zwischen Schaltnabe (33) und Keilwelle (32) zumindest ein federbelastetes Kippsprungwerk (34) mit zwei stabilen Lagen ausgebildet ist, wobei die Schaltnabe (33) in einer der stabilen Lagen mit der Antriebsbuchse (27) in Eingriff steht.

11. Fernrohr nach einem der Ansprüche 2 bis 10, **dadurch gekennzeichnet, dass** der Stellbolzen (37) in dem koaxial mit dem Drehknopf (11) verlaufenden Loch (38) in der Keilwelle (32) verschwenkbar gelagert ist.

12. Fernrohr nach einem der Ansprüche 2 bis 11, **dadurch gekennzeichnet, dass** der Riegel (42) durch einen exzentrisch ausgebildeten Abschnitt des Stellbolzens (37) gebildet ist.

13. Fernrohr nach einem der Ansprüche 2 bis 12, **dadurch gekennzeichnet, dass** die Schaltnabe (33) an einer dem Lagerloch (39) gegenüberliegenden Innenwand eine Vertiefung (41) zur teilweisen Aufnahme des Halteelements (40) aufweist, wobei in einer Stellung des Riegels (42) das Halteelement (40) durch den Riegel (42) formschlüssig in der Vertiefung (41) der Schaltnabe (33) und dem Lagerloch (39) der Keilwelle (32) fixiert ist.

14. Fernrohr nach einem der Ansprüche 4 bis 13, **dadurch gekennzeichnet, dass** in dem Deckenabschnitt (31) des Drehknopfs (11) ein Anschlagelement (43) und an der Drehknopfabdeckung (36) ein Anschlagbolzen (44) ausgebildet ist, wobei durch das Anschlagelement (43) und den Anschlagbolzen (44) der Schwenkbereich der Drehknopfabdeckung (36) begrenzt ist.

15. Fernrohr nach einem der Ansprüche 2 bis 10, **dadurch gekennzeichnet, dass** der Stellbolzen (37) in dem koaxial mit dem Drehknopf (11) verlaufenden Loch (38) in der Keilwelle (32) axial verschiebbar gelagert ist.

16. Fernrohr nach Anspruch 15, **dadurch gekennzeichnet, dass** der Riegel (42) durch einen keilförmig ausgebildeten Abschnitt des Stellbolzens (37) gebildet ist.

17. Fernrohr nach einem der Ansprüche 15 bis 16, **dadurch gekennzeichnet, dass** der Stellbolzen (37) gelenkig mit der Drehknopfabdeckung (36) verbunden ist, wobei die Drehknopfabdeckung (36) in dem Deckenabschnitt (31) bezüglich einer senkrecht zu der Längsmittelachse (9) des Drehknopfs (11) verlaufenden Achse (45) hocklappbar gelagert ist.

18. Fernrohr nach einem der Ansprüche 15 bis 17, **dadurch gekennzeichnet, dass** der Achsabschnitt (17) des Gehäuses (12), an dem die Antriebsbuchse (27) gelagert ist, an einer dem Lagerloch (39) gegenüberliegenden Innenwand eine umlaufende Nut (23) zur teilweisen Aufnahme des Halteelements (40) aufweist, wobei in einer Stellung des Riegels (42) das Halteelement (40) durch den Riegel (42) formschlüssig in der Vertiefung (41) des Achsabschnitts (17) des Gehäuses (12) und dem Lagerloch (39) der Keilwelle (32) fixiert ist.

19. Fernrohr nach einem der vorhergehenden Ansprüche, **dadurch gekennzeichnet, dass** das Halteelement (40) durch eine Kugel gebildet ist.

## Claims

1. A binocular (1) having two tubes (2, 3) which for focusing comprise axially displaceable focusing means (4), and having a joint focusing device (10), wherein the focusing device (10) comprises a housing (12) and a rotary knob (11), and the rotary knob (11) is axially displaceable on the housing (12), wherein the rotary knob (11) is rotatably coupled to a focusing gear (15) in a focusing position and the rotary knob (11) is rotatably coupled to a diopter gear (16) in a diopter balancing position, wherein the rotary knob (11) comprises a locking mechanism for holding the rotary knob (11) in the focusing position, **characterized in that** in order to produce a coupling of the rotary knob (11) to the diopter gear (16), a switching hub (33) is formed which is adjustable in the axial direction on a spline shaft (32) of the rotary knob (11) and is rotationally coupled to the spline shaft (32),
- wherein the locking mechanism comprises a holding element (40) and, in a locked position, the switching hub (33) is positively fixed relative to the spline shaft (32) by the holding element (40) and thus axial displacement of the switching hub (33) on the spline shaft (32) is prevented,
- and wherein the rotary knob (11) is formed with an operating element and the locking mechanism can be activated and deactivated by the operating element.

2. The binocular according to claim 1, **characterized in that** the locking mechanism comprises an adjusting bolt (37) with a bar (42), wherein the holding element (40) can be fixed by the bar (42), and wherein the adjusting bolt (37) is mounted in a hole (38) running coaxially with the rotary knob (11) in the spline shaft (32) and the spline shaft (32) is formed with a radially running bearing hole (39), for receiving the holding element (40), in the region of the bar (42) of the adjusting bolt (37).

3. The binocular according to claim 2, **characterized in that** the bar (42) is formed at a lower end of the adjusting bolt (37).

4. The binocular according to claim 2 or 3, **characterized in that** the operating element of the locking mechanism is mounted in a cover section (31) of the rotary knob (11), wherein the operating element is connected to an upper end of the adjusting bolt (37).

5. The binocular according to one of the preceding claims, **characterized in that** the operating element of the locking mechanism is designed as a rotary knob cover (36), wherein the rotary knob cover (36) is mounted rotatably in the cover section (31) of the rotary knob (11) relative to a longitudinal central axis (9) of the rotary knob (11).

6. The binocular according to one of the preceding claims, **characterized in that** the focusing gear (15) comprises a focusing sleeve (22) mounted axially displaceably in the housing (12) and a thread coupling (21) mounted rotatably in the housing (12).

7. The binocular according to claim 6, **characterized in that** the diopter gear (16) comprises a diopter sleeve (20) mounted rotatably on an axis section (26) of the focusing sleeve (22) and a drive bush (27) running coaxially inside the axial section (26) of the focusing sleeve (22).

8. The binocular according to claim 7, **characterized in that** the drive bush (27) is mounted rotatably on an axial section (17) of the housing (12).

9. The binocular according to one of claims 7 to 8, **characterized in that** the shifting hub (33) can be moved into engagement with the drive bush (27) by axial adjustment on the spline shaft (32).

10. The binocular according to one of claims 7 to 9, **characterized in that** at least one spring-loaded tilted spring (34) with two stable positions is formed between the shifting hub (33) and spline shaft (32), wherein the shifting hub (33) is in engagement with the drive bush (27) in one of the stable positions.

11. The binocular according to one of claims 2 to 10, **characterized in that** the adjusting bolt (37) is pivotably mounted in the spline shaft (32) in the hole (38) running coaxially to the rotary knob (11).

12. The binocular according to one of claims 2 to 11, **characterized in that** the bar (42) is formed by an eccentrically designed section of the adjusting bolt (37).

13. The binocular according to one of claims 2 to 12, **characterized in that** the shifting hub (33) on an inner wall opposite the bearing hole (39) comprises a depression (41) for partly mounting the holding element (40), wherein in one position of the bar (42) the holding element (40) is fixed by the bar (42) in a form-fitting manner in the depression (41) of the shifting hub (33) and the bearing hole (39) of the spline shaft (32).

14. The binocular according to one of claims 4 to 13, **characterized in that** in the cover section (31) of the rotary knob (11) a stop element (43) is formed and on the rotary knob cover (36) a stop bolt (44) is formed, wherein by means of the stop element (43) and the stop bolt (44) the pivot range of the rotary knob cover (36) is limited.

15. The binocular according to one of claims 2 to 10, **characterized in that** the adjusting bolt (37) is mounted to be axially displaceable in the spline shaft (32) in the hole (38) running coaxially to the rotary knob (11).

16. The binocular according to claim 15, **characterized in that** the bar (42) is formed by a wedge-shaped section of the adjusting bolt (37).

17. The binocular according to one of claims 15 to 16, **characterized in that** the adjusting bolt (37) is connected by articulation to the rotary knob cover (36), wherein the rotary knob cover (36) is mounted to be flipped up in the cover section (31) relative to an axis (45) running perpendicular to the longitudinal central axis (9) of the rotary knob (11).

18. The binocular according to one of claims 15 to 17, **characterized in that** the axial section (17) of the housing (12), on which the drive bush (27) is mounted, on an inner wall opposite the bearing hole (39) comprises a circumferential groove (23) for partly mounting the holding element (40), wherein in one position of the bar (42) the holding element (40) is fixed by the bar (42) in a form-fitting manner in the depression (41) of the axial section (17) of the housing (12) and the bearing hole (39) of the spline shaft (32).

19. The binocular according to one of the preceding claims, **characterized in that** the holding element (40) is formed by a ball.

## Revendications

1. Lunette binoculaire (1) avec deux tubes (2, 3), qui comprennent, pour la focalisation, des moyens de focalisation coulissant axialement (4), et avec un dispositif de focalisation commun (10), dans laquelle le dispositif de focalisation (10) comprend un boîtier (12) et un bouton rotatif (11) et le bouton rotatif (11) coulisse axialement sur le boîtier (12), dans lequel le bouton rotatif (11) est couplé en rotation, dans une position de focalisation, avec un mécanisme de focalisation (15) et le bouton rotatif (11) est couplé en rotation, dans une position de compensation de dioptrie, avec un mécanisme de dioptrie (16), dans laquelle le bouton rotatif (11) comprend un mécanisme d'arrêt pour le maintien du bouton rotatif (11) dans la position de focalisation, **caractérisée en ce que**, pour l'établissement d'un couplage du bouton rotatif (11) au mécanisme de dioptrie (16), est prévu un moyeu de commutation (33) mobile sur un arbre cannelé (32) du bouton rotatif (11) dans la direction axiale et couplé en rotation avec l'arbre cannelé (32),
- dans laquelle le mécanisme d'arrêt comprend un élément de maintien (40) et, dans une position arrêtée, le moyeu de commutation (33) est fixé, par complémentarité de forme, par l'élément de maintien (40) par rapport à l'arbre cannelé (32) et un coulissement axiale du moyeu de commutation (33) sur l'arbre cannelé (32) est ainsi empêché,
- et dans laquelle le bouton rotatif (11) est muni d'un élément de commande et le mécanisme d'arrêt peut être activé et désactivé par l'élément de commande.

2. Lunette selon la revendication 1, **caractérisée en ce que** le mécanisme d'arrêt comprend une tige de réglage (37) avec un verrou (42), dans laquelle l'élément de maintien (40) peut être fixé par le verrou (42) et dans laquelle la tige de réglage (37) est logée dans un trou (38) dans l'arbre cannelé (32), qui est coaxial avec le bouton rotatif (11) et l'arbre cannelé (32) est réalisé, au niveau du verrou (42) de la tige de réglage (37), avec un trou de logement radial (39) pour le logement de l'élément de maintien (40).

3. Lunette selon la revendication 2, **caractérisée en ce que** le verrou (42) est disposé sur une extrémité inférieure de la tige de réglage (37).

4. Lunette selon la revendication 2 ou 3, **caractérisée en ce que** l'élément de commande du mécanisme d'arrêt est logé dans une portion de recouvrement (31) du bouton rotatif (11), dans laquelle l'élément de commande est relié avec une extrémité supérieure de la tige de réglage (37).

5. Lunette selon l'une des revendications précédentes, **caractérisée en ce que** l'élément de commande du mécanisme d'arrêt est conçu comme un couvercle du bouton rotatif (36), dans laquelle le couvercle de bouton rotatif (36) est logé dans la portion de recouvrement (31) du bouton rotatif (11), de manière mobile par rapport à un axe central longitudinal (9) du bouton rotatif (11).

6. Lunette selon l'une des revendications précédentes, **caractérisée en ce que** le mécanisme de focalisation (15) comprend un manchon de focalisation (22) logé de manière coulissante axialement dans le boîtier (12) et un couplage à filetage (21) logé de manière rotative dans le boîtier (12).

7. Lunette selon la revendication 6, **caractérisée en ce que** le mécanisme de dioptrie (16) comprend un manchon de dioptrie (20) logé de manière rotative dans une portion axiale (26) du manchon de focalisation (22) et une douille d'entraînement (27) s'étendant de manière coaxiale à l'intérieur de la portion axiale (26) du manchon de focalisation (22).

8. Lunette selon la revendication 7, **caractérisée en ce que** la douille d'entraînement (27) est logée de manière rotative sur une portion axiale (17) du boîtier (12).

9. Lunette selon l'une des revendications 7 à 8, **caractérisée en ce que** le moyeu de commutation (33) peut être emboîté avec la douille d'entraînement (27) grâce à un déplacement axial sur l'arbre cannelé (32).

10. Lunette selon l'une des revendications 7 à 9, **caractérisée en ce que**, entre le moyeu de commutation (33) et l'arbre cannelé (32), est disposé au moins un mécanisme de basculement à saut brusque (34) sollicité par un ressort, avec deux positions stables, dans laquelle le moyeu de commutation (33) est emboîté avec la douille d'entraînement (27) dans une des positions stables.

11. Lunette selon l'une des revendications 2 à 10, **caractérisée en ce que** la tige de réglage (37) est logée de manière pivotante dans le trou (38), s'étendant de manière coaxiale avec le bouton rotatif (11), dans l'arbre cannelé (32).

12. Lunette selon l'une des revendications 2 à 11, **caractérisée en ce que** le verrou (42) est constitué d'une portion excentrique de la tige de réglage (37).

13. Lunette selon l'une des revendications 2 à 12, **caractérisée en ce que** le moyeu de commutation (33) présente, sur une paroi interne qui fait face au trou de logement (39), un renfoncement (41) pour le logement partiel de l'élément de maintien (40), dans laquelle, dans une position du verrou (42), l'élément de maintien (40) est fixé par le verrou (42), par complémentarité de forme, dans le renfoncement (41) du moyeu de commutation (33) et dans le trou de logement (39) de l'arbre cannelé (32).

14. Lunette selon l'une des revendications 4 à 13, **caractérisée en ce que**, dans la portion de recouvrement (31) du bouton rotatif (11), est disposé un élément de butée (43) et, sur le couvercle de bouton rotatif (36), est disposée une tige de butée (44), dans laquelle l'élément de butée (43) et la tige de butée (44) permettent de limiter la plage de pivotement du couvercle de bouton rotatif (36).

15. Lunette selon l'une des revendications 2 à 10, **caractérisée en ce que** la tige de réglage (37) est logée de manière coulissante axiale dans l'arbre cannelé (32) avec le trou (38) s'étendant de manière coaxiale avec le bouton rotatif (11).

16. Lunette selon la revendication 15, **caractérisée en ce que** le verrou (42) est constitué d'une portion cunéiforme de la tige de réglage (37).

17. Lunette selon l'une des revendications 15 à 16, **caractérisée en ce que** la tige de réglage (37) est reliée de manière articulée avec le couvercle de bouton rotatif (36), dans laquelle le couvercle de bouton rotatif (36) est logé, dans la portion de recouvrement (31), de manière rabattable vers le haut par rapport à un axe (45) s'étendant perpendiculairement par rapport à l'axe central longitudinal (9) du bouton rotatif (11).

18. Lunette selon l'une des revendications 15 à 17, **caractérisée en ce que** la portion axiale (17) du boîtier (12), sur laquelle la douille d'entraînement (27) est logée, présente, sur une paroi interne, qui fait face au trou de logement (39), une rainure périphérique (23) pour le logement partiel de l'élément de maintien (40), dans laquelle, dans une position du verrou (42), l'élément de maintien (40) est fixé par le verrou (42), par complémentarité de forme, dans le renfoncement (41) de la portion axiale (17) du boîtier (12) et dans le trou de logement (39) de l'arbre cannelé (32).

19. Lunette selon l'une des revendications précédentes, **caractérisée en ce que** l'élément de maintien (40) est constitué d'une sphère.
